# EUROPEAN PATENT APPLICATION

(11) **EP 4 484 475 A1**
(43) Date of publication of application: **01.01.2025**
(21) Application number: 22910858.4
(22) Date of filing: 05.12.2022
(51) Int. Cl.: C08J 5/18, H01M 10/658

(54) **HEAT-INSULATING SHEET, SHEET FOR BATTERY MODULE, AND BATTERY MODULE**

(30) Priority: 22.12.2021 JP 2021208623
(71) Applicant: Zeon Corporation, Tokyo 100-8246 (JP)
(72) Inventor: MOSAKI Shiho, Tokyo 100-8246 (JP)
(74) Representative: Maiwald GmbH
(86) International application number: PCT/JP2022/044783
(87) International publication number: WO 2023/120144

(57) **Abstract**

Provided is a heat insulating sheet that provides excellent heat insulation performance and, when the heat insulating sheet is used for a battery module, even if a certain cell instantaneously causes thermal runaway to have an ultra-high temperature and a high load, can prevent the chain of thermal runaway of adjacent cells. This disclosure is a heat insulating sheet having a 10% weight loss temperature of 300°C or more, a 20% compressive elastic modulus of 0.1 N/mm² or more, and a heat conductivity of 10 W/mK or less.

## Description

### TECHNICAL FIELD

This disclosure relates to a heat insulating sheet, a sheet for battery module, and a battery module.

### BACKGROUND

Lithium ion batteries are used in wide range of applications such as in-car application, electric power leveling application, and mobile application from a viewpoint of energy density, output density, durability, etc. In an actual use, lithium ion batteries are often used in a form of a battery module in which a plurality of battery cells are internally arranged. When one battery cell in the battery module has an abnormally high temperature due to any factor to cause thermal runaway, adjacent other battery cells might be adversely affected, which could cause thermal runaway in a chain reaction.

Attempts to use a sheet-shaped member has been made to inhibit chain-reaction thermal runaway of a plurality of battery cells.

For example, Patent Literature (PTL) 1 proposes a thermal runaway prevention sheet that includes at least one of mineral powder and a flame retardant and starts endothermic reaction at a predetermined temperature to cause structural change.

PTL 2 proposes a thermal runaway suppression fireproof sheet that includes: a substrate containing a glass fiber, a wet heat adhesive binder fiber, and a fibrillated heat resistant fiber; and an inorganic particle layer containing inorganic particles and a silicone elastomer.

The ways of using the sheet-shaped member includes arranging the sheet-shaped member between adjacent battery cells in a battery module to be an intercell separator. For example, in a case of a lithium ion battery, the battery cells may be deformed by expansion, etc. even due to charge and discharge. PTL 3, with this in mind, proposes a heat insulating sheet for power source device formed of an insulating rubber composition to have a predetermined compressive elastic modulus, in order to increase the ability to follow the deformation of battery cells.

### CITATION LIST

### Patent Literature

PTL 1: JP2018-206605A
PTL 2: JP2021-048086A
PTL 3: WO2020/129274A1

### SUMMARY

### (Technical Problem)

In recent years, the demand for safety of lithium ion batteries has increased. In particular, it is expected to be able to address a problem that, when a certain battery cell causes thermal runaway to instantaneously has an ultra-high temperature and to further cause impact such as flame and blast, adjacent battery cells are adversely affected which could cause thermal runaway in a chain reaction.

### (Solution to Problem)

The inventor found that, because the conventional attempt to use the sheet-shaped member for the problem of the thermal runaway of the lithium ion battery is mainly made by decreasing the heat conductivity of the member or improving the endothermy, when a certain cell instantaneously causes thermal runaway to have an ultra-high temperature (for example, 700 to 900°C) and a high load (for example, load due to impact such as flame and blast), leaving the sheet-shaped member is effective to solve the problem. The inventor further found that, in terms of leaving the sheet-shaped member, it is effective to control the heat resistance and flexibility of the sheet, in particular, for controlling the flexibility, to control the flexibility within a predetermined numerical range using an elastic modulus when the sheet-shaped member is compressed as an index.

This disclosure is based on the aforementioned discoveries. The main features of this disclosure are as described below.
[1] A heat insulating sheet having:
   a 10% weight loss temperature of 300°C or more,
   a 20% compressive elastic modulus of 0.1 N/mm² or more; and
   a heat conductivity of 10 W/mK or less.
[2] The heat insulating sheet according to [1], having a heat conductivity of 5 W/mK or less.
[3] The heat insulating sheet according to [2], having a heat conductivity of 1 W/mK or less.
[4] The heat insulating sheet according to any one of [1] to [3], having a 20% compressive elastic modulus of 0.2 N/mm² or more.
[5] The heat insulating sheet according to any one of [1] to [4], having a density of 0.5 g/cm³ or more.
[6] The heat insulating sheet according to [5], having a density of 0.8 g/cm³ or more.
[7] The heat insulating sheet according to any one of [1] to [6], having a glass-transition temperature of 25°C or less.
[8] The heat insulating sheet according to any one of [1] to [7], containing a polymer component as a matrix with 10 mass% or more in the total mass of the heat insulating sheet.
[9] The heat insulating sheet according to [8], wherein the polymer component contains one or more selected from the group consisting of an acrylic rubber, a fluororubber, and a nitrile rubber.
[10] The heat insulating sheet according to [8] or [9], wherein the polymer component has a cross-linked structure.
[11] A sheet for battery module, comprising the heat insulating sheet according to any one of [1] to [10].
[12] A battery module comprising the sheet for battery module according to [11].
[13] The battery module according to [12], comprising a plurality of battery cells, wherein the sheet for battery module is arranged in proximity to at least one battery cell.

This disclosure relates to a heat insulating sheet having a 10% weight loss temperature (T10) of 300°C or more, a 20% compressive elastic modulus (Ec) of 0.1 N/mm² or more, and a heat conductivity (λ) of 10 W/mK or less.

The 10% weight loss temperature (T10) refers to a temperature at the time when 10% weight loss occurs with respect to the weight of the test piece at the time of heating start, when 15 mg of a test piece is heated with a heating start temperature of 30°C and a heating end temperature of 800°C at a heating rate of 10°C/min under air atmosphere, and the loss weight of the test piece during keeping it for 10 minutes at 800°C is then measured, using a simultaneous thermogravimetric analyzer.

The 20% compressive elastic modulus (Ec) is an elastic modulus when a sheet is compressed by 20%, conforms to the compression test C method of JIS K6254, and refers to a value converted into a numerical value per area by measuring the load when the test piece is compressed by 20% (displacement: 0.4 mm) when a test piece with a thickness of 2 mm is used and compressed by setting the load to the maximum load of 900 N.

The heat conductivity (λ) refers to a value measured in accordance with ASTM D5470.

In terms of the heat insulation performance, the heat conductivity (λ) is preferably 5 W/mK or less, more preferably 1 W/mK or less.

In terms of controlling the flexibility, the 20% compressive elastic modulus (Ec) is preferably 0.2 N/mm² or more.

The presently disclosed heat insulating sheet can have a density (ρ) of 0.5 g/cm³ or more, preferably 0.8 g/cm³ or more. When the density (ρ) is within the above range, it is preferable in terms of the strength of the sheet, and it is further advantageous in terms of maintaining the heat insulation performance when the impact occurs.

The presently disclosed heat insulating sheet can have a glass-transition temperature (Tg) of 25°C or less. When the glass-transition temperature (Tg) is within the above range, it is preferable in terms of the impact resistance, and it is also advantageous in terms of maintaining the heat insulation performance when the sheet has an ultra-high temperature.

The glass-transition temperature (Tg) refers to a temperature at which the endothermic peak is observed, when 15 mg of a test piece is kept for 5 minutes after cooling it to -80°C with a cooling start temperature of 30°C at a cooling rate of 10°C/min under nitrogen atmosphere, and then heated to 200°C at a heating rate of 10°C/min, using a differential scanning calorimeter.

The presently disclosed heat insulating sheet can contain a polymer component as a matrix. At the time, the mass of the polymer component is preferably 10 mass% or more in the total mass of the heat insulating sheet.

The polymer component preferably contains one or more selected from the group consisting of an acrylic rubber, a fluororubber, and a nitrile rubber. These rubbers are advantageous in terms of leaving the sheet-shaped member when an ultra-high temperature and a high load occur. The fluororubber is preferable from a viewpoint of the heat resistance. The acrylic rubber and the nitrile rubber are preferable from a viewpoint of the impact resistance.

The polymer component preferably has a cross-linked structure in terms of the heat insulation performance and the strength of the sheet.

The application of the presently disclosed heat insulating sheet is not specifically limited. However, the presently disclosed heat insulating sheet can be suitably used for a battery module.

This disclosure relates to a sheet for battery module that includes the above-described heat insulating sheet. The sheet for battery module may be formed by the presently disclosed heat insulating sheet or may be a composite sheet including other sheets or members.

This disclosure further relates to a battery module that includes the above-described sheet for battery module. It is advantageous to arrange the above-described sheet for battery module in proximity to at least one battery cell of a plurality of battery cells included in the battery module. For example, the above-described sheet for battery module can be arranged between adjacent battery cells.

The battery module is a battery constitutional unit obtained by housing a plurality of battery cells in a housing.

The battery cell is a battery constitutional unit obtained by housing a positive electrode material, a negative electrode material, and an electrolyte in a case member and having a positive electrode tab or a positive electrode terminal, and a negative electrode tab or a negative electrode terminal. No specific limitations are placed on the shape of the cell. The shape of the cell may be a cylinder type, prismatic type, laminated type, coin type, or the like.

The battery is a secondary battery such as a lithium ion battery, a lithium ion polymer battery, a nickel metal hydride battery, a lithium sulfur battery, a nickel cadmium battery, a nickel iron battery, a nickel zinc battery, a sodium sulfur battery, a lead storage battery, and an air battery.

### (Advantageous Effect)

The presently disclosed heat insulating sheet is expected to provide excellent heat insulation performance and, for example, when the heat insulating sheet is used for a battery module as a sheet for battery module, even if a certain cell instantaneously causes thermal runaway to have an ultra-high temperature (for example, 700 to 900°C) and a high load (for example, load due to impact such as flame and blast), effectively prevent the induction of thermal runaway of adjacent cells, thus preventing adjacent cells and members from catching fire even in the case of ignition.

### BRIEF DESCRIPTION OF THE DRAWINGS

In the accompanying drawings:
FIG. 1 schematically illustrates an example of a battery module that uses a heat insulating sheet of this disclosure as a sheet for battery module, and the heat insulating sheet of this disclosure is arranged between battery cells;
FIG. 2 schematically illustrates another example of the battery module that uses the presently disclosed heat insulating sheet as a sheet for battery module, and the heat insulating sheet of this disclosure is arranged in proximity to battery cells; and
FIG. 3 schematically illustrates an example of the presently disclosed heat insulating sheet as a sheet for battery module, and each of a plurality of battery cells is wrapped by the heat insulating sheet of this disclosure.

### DETAILED DESCRIPTION

The following describes an embodiment of this disclosure in detail.

A heat insulating sheet of this disclosure has a 10% weight loss temperature (T10) of 300°C or more, having excellent heat resistance. The 10% weight loss temperature (T10) is preferably 300°C or more. No specific limitations are placed on the upper limit of the 10% weight loss temperature (T10). However, the 10% weight loss temperature (T10) can be, for example, 3000°C or less, preferably 2000°C or less.

The presently disclosed heat insulating sheet has a 20% compressive elastic modulus (Ec) of 0.1 N/mm² or more, being excellent in strength and impact resistance. The 20% compressive elastic modulus (Ec) is preferably 0.5 N/mm² or more. In terms of avoiding the embrittlement the heat insulating sheet to obtain good impact resistance, the 20% compressive elastic modulus (Ec) is preferably less than 10 N/mm², more preferably less than 4 N/mm², and further preferably less than 3 N/mm².

The presently disclosed heat insulating sheet has a heat conductivity (λ) of 10 W/mK or less, having excellent heat insulating properties. The heat conductivity (λ) is preferably 10 W/mK or less. No specific limitations are placed on the lower limit of the heat conductivity (λ). However, the heat conductivity (λ) can be, for example, 0.02 W/mK or more.

The presently disclosed heat insulating sheet can have a density (ρ) of 0.5 g/cm³ or more, preferably 0.8 g/cm³ or more. The density (ρ) is preferably 5 g/cm³ or less, more preferably 3 g/cm³ or less, in terms of ensuring the energy saving through the weight saving.

The presently disclosed heat insulating sheet can have a glass-transition temperature (Tg) of 25°C or less, preferably 0°C or less. The glass-transition temperature (Tg) is preferably -200°C or more, more preferably - 100°C or more.

The presently disclosed heat insulating sheet can contain a polymer component, and a matrix of the heat insulating sheet can be formed using the polymer component. The heat insulating sheet preferably contains a filler in addition to the polymer component. The 10% weight loss temperature (T10), the 20% compressive elastic modulus (Ec), and the heat conductivity (λ) can be controlled through the selection and the adjustment of the amounts, of the polymer component and the filler.

### <Polymer component>

The glass-transition temperature (Tg) of the polymer component is preferably 25°C or less, more preferably 0°C or less, and is preferably -200°C or more, more preferably -100°C or more, in terms of the heat insulating performance.

As the polymer component, in terms of the heat insulation performance, rubber substances are preferable, and of the rubber substances, an acrylic rubber, a fluororubber, or a nitrile rubber is preferable. Such rubber may have a cross-linked structure. One rubber may be used individually, or two or more rubbers may be used in combination in a freely selected ratio.

### «Acrylic rubber»

The acrylic rubber is a rubbery polymer obtained by polymerizing a (meth)acrylic acid ester monomer or may be a copolymer of a (meth)acrylic acid ester monomer and another monomer that is copolymerizable with the (meth)acrylic acid ester monomer.

As used herein, "(meth)acrylic" refers to methacrylic and/or acrylic.

### ((Meth)acrylic acid ester monomer)

Examples of the (meth)acrylic acid ester monomer include, but are not specifically limited to, an alkyl (meth)acrylate monomer and an alkoxyalkyl (meth)acrylate monomer.

The alkyl (meth)acrylate monomer is not specifically limited. An alkyl ester having the number of carbon atoms of 1 to 12 is preferable, an alkyl ester having the number of carbon atoms of 1 to 8 is more preferably, and an alkyl acid ester having the number of carbon atoms of 2 to 6 is further preferable.

Examples of the alkyl (meth)acrylate monomer include methyl (meth)acrylate, ethyl (meth)acrylate, n-propyl (meth)acrylate, isopropyl (meth)acrylate, n-butyl (meth)acrylate, isobutyl (meth)acrylate, n-hexyl (meth)acrylate, 2-ethylhexyl (meth)acrylate, and cyclohexyl (meth)acrylate. Of these alkyl (meth)acrylate monomers, ethyl (meth)acrylate and n-butyl (meth)acrylate are preferable, and ethyl acrylate and n-butyl acrylate are more preferable. One alkyl (meth)acrylate monomer may be used individually, or two or more alkyl (meth)acrylate monomers may be used in combination in a freely selected ratio.

The alkoxyalkyl (meth)acrylate monomer is not specifically limited. An alkoxyalkyl ester having the number of carbon atoms of 2 to 12 is preferable, an alkoxyalkyl ester having the number of carbon atoms of 2 to 8 is more preferable, and an alkoxyalkyl ester having the number of carbon atoms of 2 to 6 is further preferable.

Examples of the alkoxyalkyl (meth)acrylate monomer include methoxymethyl (meth)acrylate, ethoxymethyl (meth)acrylate, 2-methoxyethyl (meth)acrylate, 2-ethoxyethyl (meth)acrylate, 2-propoxyethyl (meth)acrylate, 2-butoxyethyl (meth)acrylate, 3-methoxypropyl (meth)acrylate, and 4-methoxybutyl (meth)acrylate. Of these alkoxyalkyl (meth)acrylate monomers, 2-ethoxyethyl (meth)acrylate and 2-methoxyethyl (meth)acrylate are preferable, and 2-ethoxyethyl acrylate and 2-methoxyethyl acrylate are particularly preferable. One alkoxyalkyl (meth)acrylate monomer may be used individually, or two or more alkoxyalkyl (meth)acrylate monomers may be used in combination in a freely selected ratio.

The mass of the (meth)acrylic acid ester monomer is preferably 30 mass% or more per 100 mass% of all monomers used for the formation of the acrylic rubber.

### (Crosslinkable monomer)

Examples of the other monomer that is copolymerizable with the (meth)acrylic acid ester monomer include a crosslinkable monomer.

Examples of the crosslinkable monomer include, but are not specifically limited to, reactive polar functional group-containing monomers such as an α,β-ethylenically unsaturated carboxylic acid monomer, an epoxy group-containing monomer, and a halogen atom-containing monomer; and diene monomers.

Examples of the α,β-ethylenically unsaturated carboxylic acid monomer include, but are not specifically limited to, α,β-ethylenically unsaturated monocarboxylic acid, α,β-ethylenically unsaturated dicarboxylic acid, and α,β-ethylenically unsaturated dicarboxylic acid monoester.

The α,β-ethylenically unsaturated monocarboxylic acid in not specifically limited and is preferably an α,β-ethylenically unsaturated monocarboxylic acid having the number of carbon atoms of 3 to 12, including acrylic acid, methacrylic acid, α-ethylacrylic acid, crotonic acid, and cinnamic acid.

The α,β-ethylenically unsaturated dicarboxylic acid in not specifically limited and is preferably an α,β-ethylenically unsaturated dicarboxylic acid having the number of carbon atoms of 4 to 12, including butenedioic acids such as fumaric acid and maleic acid; itaconic acids; citraconic acids; and chloromaleic acids.

The α,β-ethylenically unsaturated dicarboxylic acid monoester in not specifically limited. An alkyl monoester having the number of carbon atoms of 1 to 12 of an α,β-ethylenically unsaturated dicarboxylic acid having the number of carbon atoms of 4 to 12 is preferable, an alkyl monoester having the number of carbon atoms of 2 to 8 of an α,β-ethylenically unsaturated dicarboxylic acid having the number of carbon atoms of 4 to 6 is more preferable, and a butenedioic acid having the number of carbon atoms of 4 and an alkyl monoester having the number of carbon atoms of 2 to 6 are further preferable. Examples of the α,β-ethylenically unsaturated dicarboxylic acid monoesters include butenedioic acid mono-chain alkyl esters such as monomethyl fumarate, monoethyl fumarate, mono-n-butyl fumarate, monomethyl maleate, monoethyl maleate, and mono-n-butyl maleate; butenedioic acid monoesters having alicyclic structures, such as monocyclopentyl fumarate, monocyclohexyl fumarate, monocyclohexenyl fumarate, monocyclopentyl maleate, monocyclohexyl maleate, and monocyclohexenyl maleate; and itaconic acid monoesters such as monomethyl itaconate, monoethyl itaconate, mono-n-butyl itaconate, and monocyclohexyl itaconate.

One α,β-ethylenically unsaturated carboxylic acid monomer may be used individually, or two or more α,β-ethylenically unsaturated carboxylic acid monomers may be used in combination in a freely selected ratio.

Of the above-described monomers, dicarboxylic acid include a dicarboxylic acid that is present as an anhydride.

Examples of the epoxy group-containing monomer include, but are not specifically limited to, epoxy group-containing (meth)acrylic acid esters such as glycidyl (meth)acrylate; allyl glycidyl ethers; and epoxy group-containing ethers such as vinyl glycidyl ether.

Examples of the halogen atom-containing monomer include, but are not specifically limited to, unsaturated alcohol ester of halogen-containing saturated carboxylic acid, (meth)acrylic acid haloalkyl ester, (meth)acrylic acid haloacyloxyalkyl ester, (meth)acrylic acid (haloacetylcarbamoyloxy)alkyl ester, halogen-containing unsaturated ether, halogen-containing unsaturated ketone, halomethyl group-containing aromatic vinyl compound, halogen-containing unsaturated amide, and haloacetyl group-containing unsaturated monomer. The halogen atom-containing monomer preferably contains a chlorine atom as the halogen atom.

Examples of the unsaturated alcohol ester of halogen-containing saturated carboxylic acid include vinyl chloroacetate, vinyl 2-chloropropionate, and allyl chloroacetate.

Examples of the (meth)acrylic acid haloalkyl ester include chloromethyl (meth)acrylate, 1-chloroethyl (meth)acrylate, 2-chloroethyl (meth)acrylate, 1,2-dichloroethyl (meth)acrylate, 2-chloropropyl (meth)acrylate, 3-chloropropyl (meth)acrylate, and 2,3-dichloropropyl (meth)acrylate.

Examples of the (meth)acrylic acid haloacyloxyalkyl ester include 2-(chloroacetoxy)ethyl (meth)acrylate, 2-(chloroacetoxy)propyl (meth)acrylate, 3-(chloroacetoxy)propyl (meth)acrylate, and 3-(hydroxychloroacetoxy)propyl (meth)acrylate.

Examples of the (meth)acrylic acid (haloacetylcarbamoyloxy)alkyl ester include 2-(chloroacetylcarbamoyloxy)ethyl (meth)acrylate and 3-(chloroacetylcarbamoyloxy)propyl (meth)acrylate.

Examples of the halogen-containing unsaturated ether include chloromethyl vinyl ether, 2-chloroethyl vinyl ether, 3-chloropropyl vinyl ether, 2-chloroethyl allyl ether, and 3-chloropropyl allyl ether.

Examples of the halogen-containing unsaturated ketone include 2-chloroethyl vinyl ketone, 3-chloropropyl vinyl ketone, and 2-chloroethyl allyl ketone.

Examples of the halomethyl group-containing aromatic vinyl compound include p-chloromethylstyrene, m-chloromethylstyrene, o-chloromethylstyrene, and p-chloromethyl-α-methylstyrene.

Examples of the halogen-containing unsaturated amide include N-chloromethyl (meth)acrylamide.

Examples of the haloacetyl group-containing unsaturated monomer include 3-(hydroxychloroacetoxy)propyl allyl ether and p-vinylbenzyl chloroacetic acid ester.

Examples of the diene monomer include a conjugated diene monomer and a non-conjugated diene monomer.

Examples of the conjugated diene monomer include 1,3-butadiene, isoprene, and piperylene.

Examples of the non-conjugated diene monomer include ethylidene norbornene, dicyclopentadiene, dicyclopentadienyl (meth)acrylate, and 2-dicyclopentadienylethyl (meth)acrylate.

The content of the crosslinkable monomer unit among all monomer units that form the acrylic rubber is preferably 0.1 mass% or more, more preferably 0.3 mass% or more, and is preferably 20 mass% or less, more preferably 10 mass% or less.

The acrylic rubber may include the (meth)acrylic acid ester monomer unit and an optional crosslinkable monomer unit, as well as units of other monomers that are copolymerizable with these monomers. Examples of such other copolymerizable monomers include, but are not specifically limited to, an aromatic vinyl monomer, an α,β-ethylenically unsaturated nitrile monomer, an acrylamide-based monomer, an α,β-ethylenically unsaturated dicarboxylic acid diester monomer, and other olefin-based monomers.

Examples of the aromatic vinyl monomer include styrene, α-methylstyrene, and divinyl benzene.

Examples of the α,β-ethylenically unsaturated nitrile monomer include acrylonitrile and methacrylonitrile.

Examples of the acrylamide-based monomer include acrylamide and methacrylamide.

Examples of the α,β-ethylenically unsaturated dicarboxylic acid diester monomer include maleic acid dialkyl esters, such as dimethyl maleate and di-n-butyl maleate, with alkyl groups having the number of carbon atoms of 1 to 18; fumaric acid dialkyl esters, such as dimethyl fumarate and di-n-butyl fumarate, with alkyl groups having the number of carbon atoms of 1 to 18; maleic acid dicycloalkyl esters, such as dicyclopentyl maleate and dicyclohexyl maleate, with cycloalkyl groups having the number of carbon atoms of 4 to 16; fumaric acid dicycloalkyl esters, such as dicyclopentyl fumarate and dicyclohexyl fumarate, with cycloalkyl groups having the number of carbon atoms of 4 to 16; itaconic acid dialkyl esters, such as dimethyl itaconate and di-n-butyl itaconate, with alkyl groups having the number of carbon atoms of 1 to 18; and itaconic acid dicycloalkyl esters, such as dicyclohexyl itaconate, with cycloalkyl groups having the number of carbon atoms of 4 to 16.

Examples of the other olefin-based monomers include ethylene, propylene, vinyl chloride, vinylidene chloride, vinyl acetate, ethyl vinyl ether, and butyl vinyl ether.

One of the other copolymerizable monomers may be used individually, or two or more other copolymerizable monomers may be used in combination in a freely selected ratio.

The content of the units of these other copolymerizable monomers among all monomer units that form the presently disclosed acrylic rubber is preferably 70 mass% or less, more preferably 60 mass% or less.

### (Production of acrylic rubber)

Examples of the method of producing the acrylic rubber include, but are not specifically limited to, a method of polymerizing (copolymerizing) the (meth)acrylic acid ester monomer and the crosslinkable monomer, and possibly the other monomer that is copolymerizable with these monomers. Examples of the polymerization method include emulsion polymerization, suspension polymerization, bulk polymerization, and solution polymerization. The emulsion polymerization is preferable in terms of ease of controlling the polymerization reaction.

The acrylic rubber can have a Mooney viscosity (ML₁₊₄, 100°C) of 10 or more and 80 or less, preferably 15 or more, and preferably 70 or less.

The Mooney viscosity refers to a value measured in accordance with JIS K6300-1.

### (Cross-linked acrylic rubber)

The acrylic rubber may have a cross-linked structure. One acrylic rubber to be cross-linked may be used individually, or two or more acrylic rubbers to be cross-linked may be used in combination in a freely selected ratio.

### (Cross-linker)

A cross-linker can be used for cross-linking the acrylic rubber. Examples of the cross-linker to be used include, but are not specifically limited to, organic peroxide cross-linkers, nitrogen-containing cross-linkers including polyamine compounds, such as a diamine compound, and carbonates thereof, and sulfuric cross-linkers. The organic peroxide cross-linkers and the nitrogen-containing cross-linkers are preferable. One cross-linker may be used individually, or two or more cross-linkers may be used in combination in a freely selected ratio.

Examples of the organic peroxide cross-linker include, but are not specifically limited to, dicumyl peroxide, cumene hydroperoxide, t-butyl cumyl peroxide, para-menthane hydroperoxide, di-t-butyl peroxide, 1,3-bis(t-butylperoxy isopropyl)benzene, 1,4-bis(t-butylperoxy isopropyl)benzene, 1,1-di-t-butylperoxy-3,3-trimethylcyclohexane, 4,4-bis-(t-butyl-peroxy)-n-butylvalerate, 2,5-dimethyl-2,5-di-t-butylperoxyhexane, 2,5-dimethyl-2,5-dit-butylperoxyhexyne-3, 1,1-di-t-butylperoxy-3,5,5-trimethylcyclohexane, p-chlorobenzoyl peroxide, t-butylperoxyisopropyl carbonate, and t-butylperoxy benzoate. In terms of the heat resistance and rubber elasticity, 1,3-bis(t-butylperoxy isopropyl)benzene and 1,4-bis(t-butylperoxy isopropyl)benzene are preferable. One organic peroxide cross-linker may be used individually, or two or more organic peroxide cross-linkers may be used in combination in a freely selected ratio.

Examples of the nitrogen-containing cross-linker include, but are not specifically limited to, a polyamine compound and carbonates thereof. The polyamine compound and carbonates thereof are not specifically limited and are preferably a polyamine compound and carbonates thereof having the number of carbon atoms of 4 to 30. Examples of such polyamine compound and carbonates thereof include an aliphatic polyamine compound, an aromatic polyamine compound, and carbonates thereof. One nitrogen-containing cross-linker may be used individually, or two or more nitrogen-containing cross-linkers may be used in combination in a freely selected ratio.

Examples of the aliphatic polyamine compound include, but are not specifically limited to, hexamethylenediamine, hexamethylenediamine carbamate, and N,N'-dicinnamylidene-1,6-hexanediamine. Of these aliphatic polyamine compounds, hexamethylenediamine carbamate is preferable. Such aliphatic polyamine compound may be carbonate.

Examples of the aromatic polyamine compound include, but are not specifically limited to, 4,4'-methylenedianiline, p-phenylenediamine, m-phenylenediamine, 4,4'-diaminodiphenyl ether, 3,4'-diaminodiphenyl ether, 4,4'-(m-phenylenediisopropylidene)dianiline, 4,4'-(p-phenylenediisopropylidene)dianiline, 2,2-bis[4-(4-aminophenoxy)phenyl]propane, 4,4'-diaminobenzanilide, 4,4'-bis(4-aminophenoxy)biphenyl, m-xylylenediamine, p-xylylenediamine, and 1,3,5-benzenetriamin. Of these aliphatic polyamine compounds, 2,2'-bis[4-(4-aminophenoxy)phenyl]propane is preferable.

The cross-linker can be used with 0.1 parts by mass or more and 20 parts by mass or less per 100 parts by mass of the acrylic rubber. The mass of the cross-linker is preferably 0.3 parts by mass or more and is preferably 15 parts by mass or less, in terms of the breaking strength, breaking elongation, and rubber elasticity.

### (Co-cross-linker)

The acrylic rubber may be cross-linked using a co-cross-linker. The co-cross-linker is not specifically limited but is preferably a low-molecular or high-molecular compound having a plurality of radical reactive unsaturated groups in the molecule. Examples of the co-cross-linker include multifunctional vinyl compounds such as divinyl benzene and divinyl naphthalene; isocyanurates such as triallyl isocyanurate and trimethallyl isocyanurate; cyanurates such as triallyl cyanurate; maleimides such as N,N'-m-phenylenedimaleimide; polyhydric acid allyl esters such as diallyl phthalate, diallyl isophthalate, diallyl maleate, diallyl fumarate, diallyl sebacate, and triallyl phosphate; diethylene glycol bisallyl carbonates; allyl ethers such as ethylene glycol diallyl ether, triallyl ether of trimethylolpropane, and partial allyl ether of pentaerythritol; allyl modified resins such as allylated novolac and allylated resol resin; and tri- to pentafunctional methacrylate compounds and acrylate compounds, such as trimethylolpropane trimethacrylate and trimethylolpropane triacrylate. Of these co-cross-linkers, in terms of the rubber elasticity and hardness, tri- to pentafunctional methacrylate compounds and tri- to pentafunctional acrylate compounds are preferable, and trimethylolpropane trimethacrylate is more preferable.

When the co-cross-linker is used, the mass of the co-cross-linker can be 0.1 parts by mass or more and 30 parts by mass or less per 100 parts by mass of the acrylic rubber. The mass of the co-cross-linker is preferably 0.5 parts by mass or more in terms of the rubber elasticity, and is preferably 20 parts by mass or less in terms of the breaking elongation.

### (Cross-linking promoter)

The acrylic rubber may be cross-linked using a cross-linking promoter. The cross-linking promoter is not specifically limited. However, when the acrylic rubber has a carboxyl group as a crosslinkable group and the cross-linker is a polyamine compound or a carbonate thereof, a guanidine compound, a diazabicycloalkene compound, an imidazole compound, a quaternary onium salt, a tertiary phosphine compound, an aliphatic monovalent secondary amine compound, or an aliphatic monovalent tertiary amine compound can be used. Of these cross-linking promoters, a guanidine compound, a diazabicycloalkene compound, and an aliphatic monovalent secondary amine compound are preferable, and a guanidine compound and a diazabicycloalkene compound are particularly preferable. Zinc oxide or the like can be also used as a cross-linking promoter.

### «Nitrile rubber»

The nitrile rubber is a polymer obtained by polymerizing an α,β-ethylenically unsaturated nitrile monomer or may be a copolymer of the α,β-ethylenically unsaturated nitrile monomer and another monomer that is copolymerizable with the α,β-ethylenically unsaturated nitrile monomer.

### (α,β-ethylenically unsaturated nitrile monomer)

No specific limitations are place on the α,β-ethylenically unsaturated nitrile monomer so long as it is an α,β-ethylenically unsaturated compound having a nitrile group. Examples of the α,β-ethylenically unsaturated nitrile monomer include acrylonitrile; α-halogenoacrylonitrile such as α-chloroacrylonitrile and α-bromoacrylonitrile; and α-alkyl acrylonitrile such as methacrylonitrile. Of these α,β-ethylenically unsaturated nitrile monomers, acrylonitrile and methacrylonitrile are preferable, and acrylonitrile is more preferable.

One α,β-ethylenically unsaturated nitrile monomer may be used individually, or two or more α,β-ethylenically unsaturated nitrile monomers may be used in combination in a freely selected ratio.

The mass of the α,β-ethylenically unsaturated nitrile monomer is preferably 20 mass% or more in 100 mass% of the total monomers used for forming the nitrile rubber. In a case of the copolymer with the other monomer that is copolymerizable with the α,β-ethylenically unsaturated nitrile monomer, the mass of the α,β-ethylenically unsaturated nitrile monomer can be 20 mass% or more and 90 mass% or less, is preferably 30 mass% or more, more preferably 35 mass% or more, and is preferably 80 mass% or less, more preferably 70 mass% or less. With these ranges, the nitrile rubber cross-linked product can have excellent mechanical characteristics with keeping good heat resistance and chemical stability.

### (Conjugated diene monomer)

When the nitrile rubber is a copolymer of the α,β-ethylenically unsaturated nitrile monomer and the other monomer that is copolymerizable with the α,β-ethylenically unsaturated nitrile monomer, the other monomer that is copolymerizable with the α,β-ethylenically unsaturated nitrile monomer is preferably a conjugated diene monomer in terms of the expression of rubber elasticity.

Examples of the conjugated diene monomer include, but are not specifically limited to, 1,3-butadiene, isoprene, 2,3-dimethyl-1,3-butadiene, and 1,3-pentadiene. Of these conjugated diene monomers, 1,3-butadiene and isoprene are preferable, and 1,3-butadiene is more preferable.

One conjugated diene monomer may be used individually, or two or more conjugated diene monomers may be used in combination in a freely selected ratio.

The mass of the conjugated diene monomer is preferably 10 mass% or more and 80 mass% or less, more preferably 20 mass% or more, and further preferably 30 mass% or more, and is more preferably 70 mass% or less, and further preferably 65 mass% or less, in 100 mass% of the total monomers used for forming the nitrile rubber. With these ranges, the nitrile rubber cross-linked product can have excellent rubber elasticity with keeping good heat resistance and chemical stability. The conjugated diene monomer may be in a hydrogenated unit in the nitrile rubber.

### (Other monomers)

Other monomers that are copolymerizable with the α,β-ethylenically unsaturated nitrile monomer, other than the conjugated diene monomer (hereinafter, also referred to as other monomers) can include a non-conjugated diene monomer; ethylene, α-olefin monomer; aromatic vinyl monomer; α,β-ethylenically unsaturated monocarboxylic acid and ester thereof; α,β-ethylenically unsaturated polybasic carboxylic acid, and monoester , polyester, or anhydride thereof; cross-linkable monomer; and copolymerizable antioxidant.

No specific limitations are placed on the non-conjugated diene monomer. However, the non-conjugated diene monomer preferably has the number of carbon atoms of 5 to 12. Examples of the non-conjugated diene monomer include 1,4-pentadiene, 1,4-hexadiene, vinyl norbornene, and dicyclopentadiene.

No specific limitations are placed on the α-olefin monomer. However, the α-olefin monomer preferably has the number of carbon atoms of 3 to 12. Examples of the α-olefin monomer include propylene, 1-butene, 4-methyl-1-pentene, 1-hexene, and 1-octene.

Examples of the aromatic vinyl monomer include, but are not specifically limited to, styrene, α-methylstyrene, and vinylpyridine.

Examples of the α,β-ethylenically unsaturated monocarboxylic acid include, but are not specifically limited to, acrylic acid, methacrylic acid, crotonic acid, and cinnamic acid. Examples of the α,β-ethylenically unsaturated monocarboxylic acid ester include alkyl ester thereof. An alkyl ester having the number of carbon atoms of 1 to 8 is preferable. Specific examples of the alkyl ester having the number of carbon atoms of 1 to 8 include ethyl (meth)acrylate, butyl (meth)acrylate, and 2-ethylhexyl (meth)acrylate.

As used herein, "(meth)acrylic" refers to acrylic or methacrylic.

Examples of the α,β-ethylenically unsaturated polybasic carboxylic acid include, but are not specifically limited to, maleic acid, fumaric acid, and itaconic acid. Examples of the α,β-ethylenically unsaturated polybasic carboxylic acid ester include alkyl ester thereof. An alkyl ester having the number of carbon atoms of 1 to 8 is preferable.

Examples of the α,β-ethylenically unsaturated polybasic carboxylic acid monoester include maleic acid monoalkyl esters such as monomethyl maleate, monoethyl maleate, monopropyl maleate, and mono-n-butyl maleate; fumaric acid monoalkyl esters such as monomethyl fumarate, monoethyl fumarate, monopropyl fumarate, and mono-n-butyl fumarate; citraconic acid monoalkyl esters such as monomethyl citraconate, monoethyl citraconate, monopropyl citraconate, and mono-n-butyl citraconate; and itaconic acid monoalkyl esters such as monomethyl itaconate, monoethyl itaconate, monopropyl itaconate, and mono-n-butyl itaconate.

Examples of the α,β-ethylenically unsaturated polybasic carboxylic acid polyester include dimethyl maleate, di-n-butyl maleate, dimethyl fumarate, di-n-butyl fumarate, dimethyl itaconate, and di-n-butyl itaconate.

Examples of the α,β-ethylenically unsaturated polybasic carboxylic acid anhydride include maleic anhydride and itaconic anhydride.

Examples of the cross-linkable monomer include, but are not specifically limited to, polyfunctional ethylenically unsaturated monomers such as: divinyl compounds such as divinylbenzene; di(meth)acrylic acid esters such as ethylene di(meth)acrylate, diethylene glycol di(meth)acrylate, and ethylene glycol di(meth)acrylate; and trimethacrylic acid esters such as trimethylolpropane tri(meth)acrylate, as well as self-cross-linkable monomers such as N-methylol (meth)acrylamide and N,N'-dimethylol (meth)acrylamide.

Examples of the copolymerizable antioxidant include, but are not specifically limited to, N-(4-anilinophenyl)acrylamide, N-(4-anilinophenyl)methacrylamide, N-(4-anilinophenyl)cinnamamide, N-(4-anilinophenyl)crotonamide, N-phenyl-4-(3-vinyl benzyloxy)aniline, and N-phenyl-4-(4-vinyl benzyloxy)aniline.

One of the other monomers may be used individually, or two or more of the other monomers may be used in combination in a freely selected ratio. The mass of the other monomer is preferably 50 mass% or less, more preferably 40 mass% or less, and further preferably 10 mass% or less in 100 mass% of the total monomers used for forming the nitrile rubber. The mass of the other monomer may be 0 mass%.

The nitrile rubber is preferably a copolymer of the α,β-ethylenically unsaturated nitrile monomer and the conjugated diene monomer, or a copolymer of the α,β-ethylenically unsaturated nitrile monomer, the conjugated diene monomer, and the other monomer. The unit induced from the conjugated diene monomer may be hydrogenated. The nitrile rubber may be a hydrogenated nitrile rubber (including a partial hydrogenated nitrile rubber). The examples and amounts of the respective monomers are as described above.

### (Production of nitrile rubber)

Examples of the method of producing the nitrile rubber include, but are not specifically limited to, a method of polymerizing the α,β-ethylenically unsaturated nitrile monomer and possibly a method of copolymerizing the α,β-ethylenically unsaturated nitrile monomer and the other monomer that is copolymerizable with the α,β-ethylenically unsaturated nitrile monomer. Examples of the polymerization method include emulsion polymerization, suspension polymerization, bulk polymerization, and solution polymerization. The emulsion polymerization is preferable in terms of ease of controlling the polymerization reaction. Hydrogenation (hydrogenation reaction) can be performed on the obtained polymer (copolymer) to control the iodine value of the nitrile rubber. No specific limitations are placed on the hydrogenation method, and a publicly known method can be employed.

The nitrile rubber can have a Mooney viscosity (ML₁₊₄, 100°C) of 10 or more and 250 or less. The Mooney viscosity is preferably 20 or more, more preferably 30 or more, and is preferably 200 or less, more preferably 180 or less.

The Mooney viscosity is a value measured in accordance with JIS K6300-1.

The iodine value of the nitrile rubber is preferably 120 or less, more preferably 60 or less, further preferably 40 or less, and particularly preferably 30 or less.

### (Cross-linked nitrile rubber)

The nitrile rubber may have a cross-linked structure. One nitrile rubber to be cross-linked may be used individually, or two or more nitrile rubbers to be cross-linked may be used in combination in a freely selected ratio.

The description regarding the cross-link of the acrylic rubber, such as the cross-linker, co-cross-linker, and amount used for the cross-link is also applied to the cross-link of the nitrile rubber.

### «Fluororubber»

Examples of the fluororubber include, but are not specifically limited to, a homopolymer of a fluorine-containing monomer, a copolymer of two or more fluorine-containing monomers, and a copolymer of one or more fluorine-containing monomers and a non-fluorine-containing monomer that is copolymerizable with the one or more fluorine-containing monomers. The fluororubber may have a cross-linked structure. These homopolymers and copolymers encompass those having cross-linked structures. One fluororubber may be used individually, or two or more fluororubbers may be used in combination in a freely selected ratio.

Examples of the fluorine-containing monomer include, but are not specifically limited to, crosslinkable monomers such as vinylidene fluoride, hexafluoropropylene, tetrafluoroethylene, pentafluoropropylene, trifluoroethylene, trifluorochloroethylene, vinyl fluoride, perfluoromethyl vinyl ether, perfluoroethyl vinyl ether, and brominated and/or iodinated unsaturated fluoro hydrocarbon.

Examples of the non-fluorine-containing monomer that is copolymerizable with the fluorine-containing monomer include ethylene and propylene.

Examples of the fluororubber include binary copolymers such as a vinylidene fluoride-hexafluoropropylene copolymer, a tetrafluoroethylenepropylene copolymer, and a tetrafluoroethylene-perfluoromethyl vinyl ether copolymer; a ternary copolymer of a vinylidene fluoride-hexafluoropropylene-tetrafluoroethylene copolymer, and a copolymer of a monomer that forms a ternary copolymer and a crosslinkable monomer.

The content of the fluorine atom in the fluororubber is preferably 65 mass% or more, more preferably 67 mass% or more, and further preferably 69 mass% or more. When the content of the fluorine atom in the fluororubber is 65 mass% or more, the heat resistance of the fluororubber cross-linked product is increased.

When the fluororubber is cross-linked, one fluororubber to be cross-linked may be used individually, or two or more fluororubbers to be cross-linked may be used in combination in a freely selected ratio. The description regarding the cross-link of the acrylic rubber, such as the cross-linker, co-cross-linker, and amount used for the cross-link is also applied to the cross-link of the fluororubber.

During the cross-link of the fluororubber, because acid components such as hydrofluoric acid are generated, an acid acceptor for trapping them can be used. Examples of the acid acceptor include magnesium oxide and calcium hydroxide.

### <Filler>

Examples of the filler include metallic inorganic oxides such as aluminum oxide, magnesium oxide, calcium oxide, silicon oxide (silica), and titanium oxide; metal hydroxides such as aluminum hydroxide and magnesium hydroxide; metallic nitrides such as boron nitride and silicon nitride; and inorganic fillers such as talc (magnesium silicate), zirconium phosphate, diatomite, zeolite, and vermiculite. Fillers such as zinc methacrylate and sodium benzoate can be also used. Of these fillers, zirconium phosphate, magnesium hydroxide, and zinc methacrylate are preferable in terms of the strength.

Carbon-based fillers (for example, graphite, carbon nanotubes, carbon black, graphene nanoplate, graphene, carbon fiber, etc.) can be used. These carbon-based fillers are preferable in terms of the strength. Of these carbon-based fillers, carbon black and carbon fiber are preferable.

Inorganic fibers such as a glass fiber and a ceramic fiber, and short fibers such as a polyethylene fiber can be also used.

A filler with a decomposition temperature of 200°C or more is preferably used in terms of the heat resistance. The decomposition temperature is more preferably 300°C or more. No specific limitations are placed on the upper limit of the decomposition temperature. However, the decomposition temperature can be, for example, 3000°C or less.

The filler can also function as an additive, depending on the function of the filler.

A thermally dissipated filler (for example, melamine cyanurate) can be used in terms of the improvement in endothermy.

### <Amounts of polymer component and filler>

The presently disclosed heat insulating sheet can contain a polymer component as a matrix. In this case, the mass of the polymer component is preferably 10 mass% or more, more preferably 40 mass% or more, in the total mass of the heat insulating sheet. No specific limitations are placed on the upper limit of the mass of the polymer component. The mass of the polymer component may be 100 mass%. However, the mass of the polymer component can be 95 mass% or less, in terms of expressing the desired function by containing other components.

When the heat insulating sheet contains a polymer component and a filler, the mass of the filler can be 5 parts by mass or more and 200 parts by mass or less, and is preferably 10 parts by mass or more and 100 parts by mass or less in terms of the heat insulation performance, per 100 parts by mass of the polymer component.

### <Other components>

Various compounding agents, which are publicly known in the rubber field, can be used as the other components. Examples of the compounding agents include a reinforcing agent, filler, antioxidant, light stabilizer, antiscorching agent, plasticizer, processing aid, lubricant, adhesive, lubricant agent, flame retardant, acid acceptor, fungicide, antistatic agent, colorant, silane coupling agent, cross-linking promoter, cross-linking retardant, and foaming agent. The amounts of these compounding agents may be set in accordance with the objective of compounding.

### <Heat insulating sheet>

The presently disclosed heat insulating sheet can be obtained by, for example, mixing the polymer component, the filler, and optional compounding agents to prepare a composition, and shaping the composition into a sheet shape using a forming machine, for example, an extruder injection molder, a compressor, or a roller.

When a rubber substance used for the polymer component is cross-linked, a composition can be prepared by performing primary kneading on components except for the cross-linker and thermally unstable components (co-cross-linker, cross-linking promoter, etc.) in a mixer such as a Banbury mixer, an inter mixer, and a kneader and then performing secondary kneading by transferring the components to a roll, etc. and adding the cross-linker and thermally unstable components thereto. A sheet can be obtained by shaping the composition, performing crosslinking reaction by heating to form a nitrile rubber cross-linked product, and fixing its shape in a sheet form. The composition may be cross-linked after preliminarily shaping it into a sheet or may be cross-linked at the same time of the shaping into a sheet.

The thickness of the presently disclosed heat insulating sheet is not specifically limited and can be set as appropriate depending on the application. When the heat insulating sheet is used as a sheet for battery module, the thickness of the sheet can be 0.01 mm or more and 50 mm or less, the thickness of the sheet is preferably 0.05 mm or more in terms of preventing the problems at the time of thermal runaway, and the thickness of the sheet is 30 mm or less in terms of the battery capacity.

The sheet for battery module is preferably arranged in proximity to a battery cell in the battery module and more preferably arranged directly in contact with the battery cell.

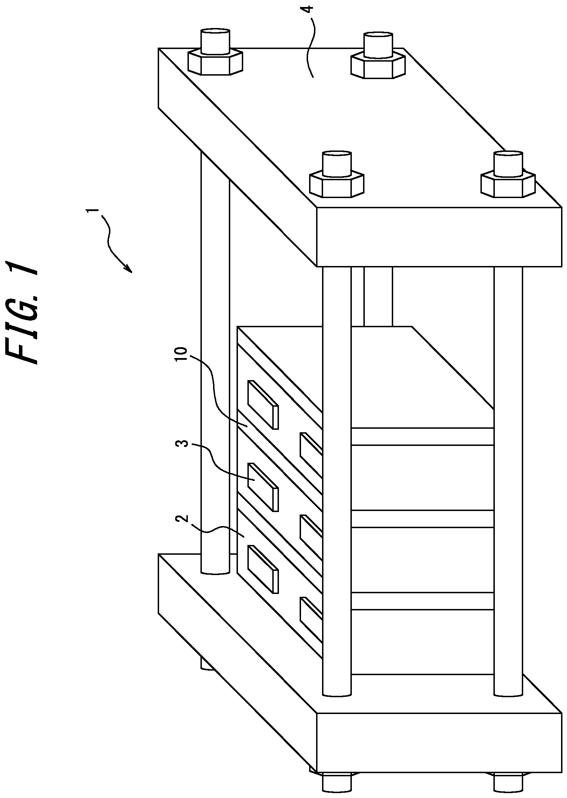

For example, as illustrated in FIG. 1, the presently disclosed sheet can be arranged between adjacent battery cells to be an intercell spacer. Such a structure can insulate adjacent battery cells one another to prevent chain-reaction thermal runaway and also can prevent adjacent battery cells from catching fire when a battery cell ignites.

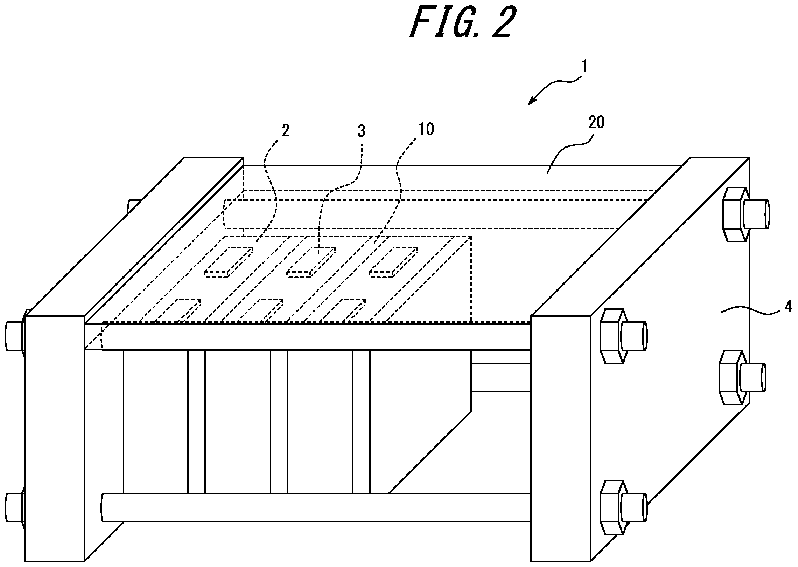

As illustrated in FIG. 2, the presently disclosed sheet can be arranged in proximity to battery cells. This can cause the presently disclosed sheet to function as a fire prevention sheet. When a battery cell ignites, the presently disclosed sheet can prevent other members in the battery module and other battery modules from catching fire.

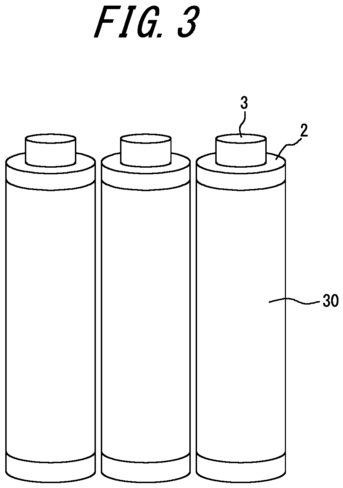

As illustrated in FIG. 3, the presently disclosed sheet can be wrapped around each battery cell to be an intercell film. Such a structure can insulate adjacent battery cells one another to prevent chain-reaction thermal runaway and also can prevent adjacent battery cells from catching fire when a battery cell ignites.

The application of the presently disclosed heat insulating sheet is not limited to the use for battery module. Examples of the application utilizing excellent heat resistance and impact resistance include the use for architecture or automobile.

### EXAMPLES

The present disclosure is described in more detail below through examples. However, this disclosure is not limited to these examples. In the examples, part, %, and ppm indicate part by mass, mass%, and mass ppm, respectively, unless otherwise noted.

Evaluations of examples and comparative examples were performed as described below.

### <Measurement of 10% weight loss temperature (T10)>

After weighing 15 mg of a sample (thickness: 2 mm) from each sheet in examples and comparative examples, the sample is put into a platinum pan. With the empty platinum pan as a reference, the sample is heated with a heating start temperature of 30°C at a heating rate of 10°C/min and then kept at 800°C for 10 minutes, under air atmosphere, using a simultaneous thermogravimetric analyzer. The loss weight of the sample at the time is measured. Using the output graph, the temperature at the time when 10% weight loss occurs with respect to the weight of the sample at the time of heating start is read.

### <Measurement of 20% compressive elastic modulus (Ec)>

A sample with 15 mm in length, 15 mm in width, and 2 mm in thickness is obtained from each sheet in the examples and comparative examples. A compression jig is attached to a tensile test machine, the maximum load is set to 900 N, the sample is once compressed, and the load when the sample is compressed by 20% at the time is measured using a load cell. The 20% compressive elastic modulus is calculated by dividing the load when the sample is compressed by 20% by a contact area (15 mm × 15 mm = 225 mm²) with the sample of the compression jig.

### <Fire resistance test>

Two cylindrical lithium ion battery cells (produced by Panasonic; NCR18650B) (one is referred to as a trigger cell, while the other is referred to as an adjacent cell) were prepared. Each sheet (18 mm in length, 70 mm in width, and 1 mm in thickness) in the examples and comparative examples is arranged as an intercell spacer between the cells, and the outside was then fixed by a metallic plate.

A nail (diameter: 2 mm) was hit to a depth of 9 mm at 1 mm/s from the side surface of the trigger cell, and the trigger cell was forcibly caused to cause thermal runaway to be ignited. The temperature at the surface opposite to the surface on which the sheet has been arranged, of the adjacent cell was measured, and the maximum value (°C) was then recorded. The thermal runaway makes the temperature at the lower surface opposite to the surface on which the sheet has been arranged, of the trigger cell reach 700 to 900°C.

### <Measurement of heat conductivity (λ)>

A sample with 50 mm in length, 50 mm in width, and 2 mm in thickness is obtained from each sheet in the examples and comparative examples. The sample is installed to cover the sensor portion of a heat conductivity measurement device (TRIDENT). Except for the case of samples that absorb liquid such as foam, about 0.1 mL of distilled water is preliminarily dropped onto the sensor to ensure the contact area, and the heat conductivity is then measured 3 times. The heat conductivity (λ) is calculated from the average value. Comparative Examples 1 and 2 correspond to the samples that absorb liquid, and the measurement is performed without dropping the distilled water in these cases.

### <Measurement of glass-transition temperature (Tg)>

After weighing 15 mg of a sample from each sheet in the examples and comparative examples, the sample is cooled to -80°C with a cooling start temperature of 30°C at a cooling rate of 10°C/min and then kept for 5 minutes, under nitrogen atmosphere, using a differential scanning calorimeter. Subsequently, when the sample is heated to 200°C at a heating rate of 10°C/min, the temperature at which the endothermic peak is observed is set to a glass-transition temperature (Tg).

The following describes components used for producing each sheet in the examples and comparative examples.

### <Production Example 1: Production of Acrylic rubber (1)>

A polymerization reactor equipped with a thermometer, a stirrer, a nitrogen supply tube, and a decompressor was charged with 200 parts of water, 3 parts of sodium lauryl sulfate, 48.1 parts of ethyl acrylate, 50.4 parts of n-butyl acrylate, and 1.75 parts of mono-n-butyl fumarate.

Subsequently, after sufficiently removing oxygen by repeating deaeration by decompression and nitrogen substitution, 0.002 parts of sodium formaldehyde sulfoxylate and 0.005 parts of cumene hydroperoxide were added thereto. Under ordinary pressure and ordinary temperature, emulsion polymerization reaction was initiated, and the reaction was then continued until the polymerization conversion rate reached 95%. The obtained emulsion polymerization liquid was solidified using an aqueous calcium chloride solution, washed with water, and then dried to obtain Acrylic rubber (1).

The composition of obtained Acrylic rubber (1) includes 48.1% of constitutional units derived from ethyl acrylate, 50.15% of constitutional units derived from n-butyl acrylate, and 1.75% of constitutional units derived from mono-n-butyl fumarate.

### <Production Example 2: Production of Hydrogenated nitrile rubber (1)>

In a reactor, 0.2 parts of sodium carbonate was dissolved into 200 parts of deionized water, and 2.25 parts of fatty acid potassium soap (potassium salt of fatty acid) was added thereto to prepare a soapy aqueous solution. Then, 41 parts of acrylonitrile and 0.47 parts of t-dodecyl mercaptan (molecular weight modifier) were added to the soapy aqueous solution in this order, the internal gas was substituted by nitrogen 3 times, and 59 parts of 1,3-butadiene was then added thereto.

Subsequently, the temperature in the reactor was kept at 5°C, 0.1 parts of cumene hydroperoxide (polymerization initiator), a reductant, and a moderate amount of chelating agent were added thereto, and polymerization reaction was then performed for 16 hours while keeping the temperature at 5°C. Subsequently, 0.1 parts of hydroquinone (polymerization terminator) aqueous solution with a concentration of 10% was add thereto to stop the polymerization reaction, and residual monomers were removed using a rotary evaporator with a water temperature of 60°C to obtain latex (solid content concentration: about 25%) of the nitrile rubber.

Subsequently, the latex obtained as above was added into an aqueous aluminum sulfate solution with an amount of 3% with respect to the dry weight of the rubber contained in the latex and stirred to solidify the latex. After the latex was isolated by filtration while washing it with water, the latex was vacuum dried at 60°C for 12 hours to obtain a nitrile rubber. Then, the obtained nitrile rubber was dissolved in acetone to have a concentration of 12% and then put in an autoclave. A palladium silica catalyst was added thereto with 5000 ppm with respect to the nitrile rubber, and hydrogenation reaction was then performed at a hydrogen pressure of 3.0 MPa. After the hydrogenation reaction, the reactant was poured into a large volume of water to solidify it, and isolated by filtration and dried to obtain Hydrogenated nitrile rubber (1).

For the composition of obtained Hydrogenated nitrile rubber (1), the acrylonitrile unit was 40.0%, the butadiene unit (including a hydrogenated part) was 60%, the iodine value was 7, and the polymer Mooney viscosity (ML₁₊₄, 100°C) was 95.

### <Production Example 3: Production of Hydrogenated nitrile rubber (2)>

A reactor was charged with 220 parts of deionized water, 5 parts of sodium dodecylbenzenesulfonate aqueous solution with a concentration of 10%, 37 parts of acrylonitrile, 4 parts of mono-n-butyl maleate, and 0.75 parts of t-dodecyl mercaptan (molecular weight modifier) in this order. The internal gas was substituted by nitrogen 3 times, and 57 parts of 1,3-butadiene was then added thereto. Subsequently, the temperature in the reactor was kept at 10°C, 0.06 parts of cumene hydroperoxide (polymerization initiator), a reductant, and a moderate amount of chelating agent were added thereto, and polymerization reaction was then continued while stirring these materials. At the time points when the polymerization conversion rate reached 40% and 60%, 1 part of mono-n-butyl maleate was each added thereto. At the time point when the polymerization conversion rate reached 85%, 0.1 parts of hydroquinone aqueous solution (polymerization terminator) with a concentration of 10% was added thereto to stop the polymerization reaction. Subsequently, residual monomers were removed at a water temperature of 60°C to obtain latex (solid content concentration: 30%) of the nitrile rubber.

Then, the latex of the nitrile rubber and palladium catalyst (solution obtained by mixing 1% palladium acetate acetone solution and an equivalent weight of deionized water) were added into an autoclave such that the palladium content with respect to the dry weight of the rubber contained in the latex of the nitrile rubber obtained as above was 1,000 ppm, and hydrogenation reaction was performed for 6 hours at a hydrogen pressure of 3 MPa and a temperature of 50°C to obtain latex of the nitrile rubber.

Two volume equivalents of methanol was added to the obtained latex of the nitrile rubber to cause solidification, and the solid product was then vacuum dried for 12 hours at 60°C to obtain Hydrogenated nitrile rubber (2).

Obtained Hydrogenated nitrile rubber (2) had a carboxyl group content of 0.030 ephr, an iodine value of 9, and a polymer Mooney viscosity [ML₁₊₄, 100°C] of 44.

Obtained Hydrogenated nitrile rubber (2) included 35.7% of acrylonitrile units, 58.6% of butadiene units (including hydrogenated parts), and 5.7% of mono-n-butyl maleate units.

The following describes materials used for producing each sheet in the examples and comparative examples.

### <Fluororubber>

Fluororubber (1): Viton^{®} (Viton is a registered trademark in Japan, other countries, or both) GF600S produced by the Chemours Company
Fluororubber (2): Viton^{®} (Viton is a registered trademark in Japan, other countries, or both) A401C produced by the Chemours Company

### <Carbon filler>

Carbon black (1): Seast SO produced by Tokai Carbon Co., Ltd.
Carbon black (2): Thermax N990 produced by Cancarb Limited

### <Processing aid>

Processing aid (1): stearic acid
Processing aid (2): Greg G-8205 (ester-based wax) produced by DIC Corporation
Processing aid (3): Phosphanol RL210 (polyoxyethylene stearyl ether phosphoric acid) produced by TOHO Chemical Industry Co., Ltd.

### <Antioxidant>

Antioxidant (1): NOCRAC CD (4,4'-bis(α,α-dimethylbenzyl)diphenylamine) produced by Ouchi Shinko Chemical Industrial Co., Ltd
Antioxidant (2): NOCRAC MBZ (zinc salt of 2-mercaptobenzimidazole) produced by Ouchi Shinko Chemical Industrial Co., Ltd

### <Cross-linker, cross-linking promoter, and co-cross-linker)

Cross-linker or the like (1): Diak#1 (hexamethylenediamine carbamate) produced by Dupont Dow Elastomers LLC
Cross-linker or the like (2): Rhenogran XLA-60 (synthetic mixture of active amine and retardant) produced by LANXESS
Cross-linker or the like (3): PERHEXA^{®} (PERHEXA is a registered trademark in Japan, other countries, or both) 25B-40 (2,5-dimethyl-2,5-di(t-butylperoxy)hexane; purity: 40%) produced by NOF Corporation
Cross-linker or the like (4): Vul-Cup 40KE (1,3-1,4-bis(t-butylperoxyisopropylbenzene); purity: 40%) produced by Arkema
Cross-linker or the like (5): TAIC (triallyl isocyanurate) produced by Mitsubishi Chemical Corporation
Cross-linker or the like (6): zinc oxide

### <Others>

Acid acceptor (1): KYOWAMAG 150 (magnesium oxide) produced by Kyowa Chemical Industry Co., Ltd.

Acid acceptor (2): CALDIC#1000 (calcium hydroxide) produced by Ohmi Chemical Industry Co., Ltd.

The following describes a method of producing each sheet in the examples and comparative examples.

### <Example 1>

Using a kneader, Carbon black (1), Processing aids (1) and (2), and Antioxidant (1) were added to Acrylic rubber (1) with the amounts presented in Table 1, and these materials were kneaded at 50°C for 5 minutes to obtain an acrylic rubber compound. Subsequently, the obtained rubber compound was transferred to an open roll, Cross-linkers or the like (1) and (2) were added to the rubber compound, and these materials were kneaded at 50°C to obtain an acrylic rubber composition.

The obtained acrylic rubber composition was placed in a mold with 15 cm in length, 8 cm in width, and 0.2 cm in depth, press molded at 170°C for 20 minutes while applying a pressing pressure of 10 MPa, and then heated at 170°C for 4 hours using an oven to obtain a sheet.

The evaluation results of the obtained sheet are presented in Table 1.

### <Example 2>

Using an open roll, Carbon black (2) and Cross-linkers or the like (3) and (5) were added to Fluororubber (1) with the amounts presented in Table 1, and these materials were kneaded under water cooling to prepare a fluororubber composition.

The obtained fluororubber composition was placed in a mold with 15 cm in length, 8 cm in width, and 0.2 cm in depth, press molded for 20 minutes at 170°C while applying a pressing pressure of 10 MPa, and subsequently heated for 4 hours at 230°C using an oven to obtain a sheet.

The evaluation results of the obtained sheet are presented in Table 1.

### <Example 3>

Using an open roll, Carbon black (2) and Acid acceptors (1) and (2) were added to Fluororubber (2) with the amounts presented in Table 1, and these materials were kneaded under water cooling to prepare a fluororubber composition.

The obtained fluororubber composition was placed in a mold with 15 cm in length, 8 cm in width, and 0.2 cm in depth, press molded for 20 minutes at 170°C while applying a pressing pressure of 10 MPa, and subsequently heated for 24 hours at 230°C using an oven to obtain a sheet.

The evaluation results of the obtained sheet are presented in Table 1.

### <Example 4>

Using a kneader, Carbon black (1), Processing aid (1), Antioxidants (1) and (2), and Cross-linker or the like (6) were added to Hydrogenated nitrile rubber (1), and these materials were kneaded for 5 minutes at 50°C to obtain a hydrogenated nitrile rubber compound. Subsequently, the obtained rubber compound was transferred to an open roll, Cross-linker or the like (4) was added to the rubber compound, and these materials were kneaded at 50°C to prepare a hydrogenated nitrile rubber composition.

The obtained hydrogenated nitrile rubber composition was placed in a mold with 15cm in length, 8cm in width, and 0.2 cm in depth, and press molded for 20 minutes at 170°C while applying a pressing pressure of 10 MPa to obtain a sheet.

The evaluation results of the obtained sheet are presented in Table 1.

### <Example 5>

Using a kneader, Carbon black (1), Processing aids (1) and (3), and Antioxidant (1) were added to Hydrogenated nitrile rubber (2), and these materials were kneaded for 5 minutes at 50°C to obtain a hydrogenated nitrile rubber compound. Subsequently, the obtained rubber compound was transferred to an open roll, Cross-linkers or the like (1) and (2) were added to the rubber compound, and these materials were kneaded at 50°C to prepare a hydrogenated nitrile rubber composition.

The obtained hydrogenated nitrile rubber composition was placed in a mold with 15cm in length, 8cm in width, and 0.2 cm in depth, press molded for 20 minutes at 170°C while applying a pressing pressure of 10 MPa, and subsequently heated for 4 hours at 170°C using an oven to obtain a sheet.

The evaluation results of the obtained sheet are presented in Table 1.

### <Comparative Examples 1 and 2>

Evaluation were performed using the following sheets. Table 1 presents the evaluation.

### <Sheet of Comparative Example>

Comparative Example 1: high-density urethane sheet PORON^{®} (PORON is a registered trademark in Japan, other countries, or both) produced by INOAC CORPORATION
Comparative Example 2: NASBIS^{®} (NASBIS is a registered trademark in Japan, other countries, or both) produced by Panasonic Corporation

**[Table 1]**

| | | Example 1 | Example 2 | Example 3 | Example 4 | Example 5 | Comparative Example 1 | Comparative Example 2 |
|---|---|---|---|---|---|---|---|---|
| | Acrylic rubber (1) | 100 | | | | | | |
| | Fluororubber (1) | | 100 | | | | | |
| | Fluororubber (2) | | | 100 | | | | |
| | Hydrogenated nitrile rubber (1) | | | | 100 | | | |
| | Hydrogenated nitrile rubber (2) | | | | | 100 | | |
| | Carbon black (1) | 55 | | | 40 | 40 | | |
| | Carbon black (2) | | 20 | 20 | | | | |
| | Processing aid (1) | 2 | | | 1 | 1 | | |
| | Processing aid (2) | 1 | | | | | | |
| Composition (parts by mass) | Processing aid (3) | | | | | 1 | | |
| | Antioxidant (1) | 1 | | | 1.5 | 1.5 | | |
| | Antioxidant (2) | | | | 1.5 | | | |
| | Cross-linker or the like (1) | 0.5 | | | | 2.3 | | |
| | Cross-linker or the like (2) | 4 | | | | 4 | | |
| | Cross-linker or the like (3) | | 1.5 | | | | | |
| | Cross-linker or the like (4) | | | | 8 | | | |
| | Cross-linker or the like (5) | | 3 | | | | | |
| | Cross-linker or the like (6) | | | | 5 | | | |
| | Acid acceptor (1) | | | 3 | | | | |
| | Acid acceptor (2) | | | 6 | | | | |
| Evaluation | Density (g/cm³) | 1.2 | 1.9 | 1.9 | 1.3 | 1.3 | 0.3 | 0.1 |
| | T10 (°C) | 418 | 371 | 398 | 426 | 428 | 276 | 342 |
| | 20% compressive elastic modulus (N/mm²) | 0.418 | 0.264 | 0.265 | 0.287 | 0.302 | 0.043 | 0.039 |
| | Fire resistance test result (°C) | 130 | 110 | 120 | 150 | 150 | 750 | 200 |
| | Heat conductivity (W/mK) | 0.45 | 0.24 | 0.23 | 0.3 | 0.31 | 0.075 | 0.02 |
| | Tg (°C) | -29.7 | -25.7 | -25.4 | -30.7 | -15.5 | -42.1 | * |

| | | | | | | | | |
|---|---|---|---|---|---|---|---|---|
| * No endothermic peak is observed. There is no Tg. | | | | | | | | |

It is found that, even if a certain trigger cell instantaneously causes thermal runaway to have an ultra-high temperature (for example, 700 to 900°C) to cause flame, each sheet in Examples 1 to 5 effectively prevents the induction of thermal runaway of adjacent cells.

### INDUSTRIAL APPLICABILITY

The presently disclosed heat insulating sheet is industrially applicable because it is expected to provide excellent heat insulation performance and, for example, when the heat insulating sheet is used as a sheet for battery module for a battery module, even if a certain cell instantaneously causes thermal runaway to have an ultra-high temperature and a high load, effectively prevent the induction of thermal runaway of adjacent cells, thus preventing adjacent cells and members from catching fire even in the case of ignition.

### REFERENCE SIGNS LIST

- 1: battery module
- 2: cell
- 3: electrode terminal
- 4: support member
- 10: intercell spacer
- 20: fire prevention sheet
- 30: intercell film

## Claims

1. A heat insulating sheet having:
a 10% weight loss temperature of 300°C or more,
a 20% compressive elastic modulus of 0.1 N/mm² or more; and
a heat conductivity of 10 W/mK or less.

2. The heat insulating sheet according to claim 1, having a heat conductivity of 5 W/mK or less.

3. The heat insulating sheet according to claim 2, having a heat conductivity of 1 W/mK or less.

4. The heat insulating sheet according to claim 1, having a 20% compressive elastic modulus of 0.2 N/mm² or more.

5. The heat insulating sheet according to claim 1, having a density of 0.5 g/cm³ or more.

6. The heat insulating sheet according to claim 5, having a density of 0.8 g/cm³ or more.

7. The heat insulating sheet according to claim 1, having a glass-transition temperature of 25°C or less.

8. The heat insulating sheet according to claim 1, containing a polymer component as a matrix with 10 mass% or more in the total mass of the heat insulating sheet.

9. The heat insulating sheet according to claim 8, wherein the polymer component contains one or more selected from the group consisting of an acrylic rubber, a fluororubber, and a nitrile rubber.

10. The heat insulating sheet according to claim 8, wherein the polymer component has a cross-linked structure.

11. A sheet for battery module, comprising the heat insulating sheet according to any one of claims 1 to 10.

12. A battery module comprising the sheet for battery module according to claim 11.

13. The battery module according to claim 12, comprising a plurality of battery cells, wherein the sheet for battery module is arranged in proximity to at least one battery cell.
